(19) Europäisches Patentamt

European Patent Office

Office européen des brevets

(11) **EP 0 969 154 B1**

(12) **EUROPÄISCHE PATENTSCHRIFT**

(45) Veröffentlichungstag und Bekanntmachung des Hinweises auf die Patenterteilung:
**22.09.2004 Patentblatt 2004/39**

(51) Int Cl.⁷: **E03F 3/04**

(21) Anmeldenummer: **99112566.7**

(22) Anmeldetag: **01.07.1999**

(54) **Rohre aus Beton und Stahlbeton mit optimierten Eigenschaften und Verlegeverfahren dafür**

Concrete or reinforced concrete pipes with optimised characteristics and method of laying

Tubes en béton ou béton armé avec propriétés optimisées et procédé pour la pose

(84) Benannte Vertragsstaaten:
**AT BE CH CY DE DK ES FI FR GB GR IE IT LI LU MC NL PT SE**

(30) Priorität: **01.07.1998 DE 19829479**

(43) Veröffentlichungstag der Anmeldung:
**05.01.2000 Patentblatt 2000/01**

(73) Patentinhaber: **Prof. Dr.-Ing. Stein & Partner GmbH**
**44799 Bochum (DE)**

(72) Erfinder:
• **Stein, Dietrich, Prof. Dr.-Ing.**
**44892 Bochum (DE)**

• **Körkemeyer, Karsten, Dipl.-Ing.**
**45665 Recklinghausen (DE)**

(74) Vertreter: **Liesegang, Roland, Dr.-Ing.**
**FORRESTER & BOEHMERT**
**Pettenkoferstrasse 20-22**
**80336 München (DE)**

(56) Entgegenhaltungen:
**EP-A- 0 508 875           BE-A- 683 129**
**BE-A- 801 209             DE-A- 3 026 681**
**DE-A- 4 220 880           DE-C- 686 088**
**FR-A- 935 451             GB-A- 2 124 728**
**US-A- 2 261 912**

**Beschreibung**

Die Erfindung betrifft Rohre aus Beton und Stahlbeton mit optimierten Eigenschaften und Verlegeverfahren dafür.

**Gebiet der Erfindung und Stand der Technik**

Kanalisationen werden in der Regel in offener Bauweise verlegt. Hierzu wird ein Graben bis zur vorgesehenen Verlegetiefe ausgehoben; die Rohre werden auf der vorbereiteten Grabensohle aufgelagert und anschließend eingebettet und überschüttet. Die Standsicherheit der Rohre wird maßgeblich durch die Qualität von Auflager und Einbettung bestimmt. Die Grabensicherung erfolgt in der Regel durch Verbauelemente, in Ausnahmefällen durch Abböschung. Zur Montage der Rohre und zur Herstellung der Einbettung ist ein entsprechend den Rohrabmessungen dimensionierter Arbeitsraum einzuhalten.

Wie die Erfahrungen zeigen, treten oftmals bereits während oder kurz nach der Verlegung der Rohre Schäden auf, die sich auf eine mangelhafte Verlegequalität zurückführen lassen.

Es ist davon auszugehen, daß sich diese Tendenz in Zukunft angesichts des Kostendruckes im Tiefbau sowie der Bestrebungen nach Kostenreduktion durch Einführung neuer Verlegetechniken, mit denen sich die DIN-gemäßen Anforderungen an die Verlegung nicht immer erfüllen lassen, verstärken wird.

Um dennoch dauerhafte und dichte Kanalisationen zu erhalten, sind entsprechend verbesserte Rohre zu konzipieren.

An die Betriebssicherheit von Kanalisationen werden immer höhere Anforderungen gestellt:

○ Größere Beanspruchung durch stärker werdende Mechanisierung der Verlegetechnik.

○ Größere Grabenbreiten ergeben höhere Erdlasten; die für die Lastwirkung günstige Grabenbedingung wird in vielen Fällen nicht mehr erreicht.

○ Umgekehrt läßt sich bei geringen Grabenbreiten die Einbettung der Rohre und die Zwickelverdichtung nicht sicher realisieren.

○ Schwere Einbaugeräte beanspruchen die Rohrleitung, noch bevor eine ausreichende Überdeckung vorhanden ist.

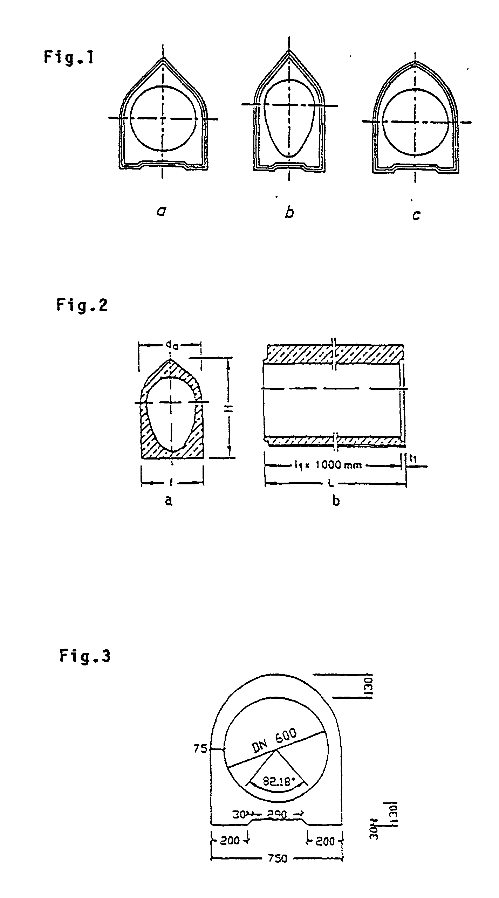

Dieser Entwicklung mußte mit einer stärkeren Tragfähigkeit der Betonrohre Rechnung getragen werden. Das geschah in der Vergangenheit zum einen durch die Verbesserung der Betonqualität, zum anderen mittels größerer Wanddicken (wandverstärkte Rohre). Es kam zwischenzeitlich auch zu verschiedenen Sonderformen (Fig.1) und den sogenannten Großlast- und Atlas-Rohren (Fig.2). Hier zeigen jeweils im schematischen Querschnitt Fig.1a eine Standard-Form mit Kreisprofil, Fig.1b eine Standard-Form mit Ei-Profil und Fig.1c eine Form mit verbessertem Querschnitt. Fig.2 zeigt im Querschnitt und Längsschnitt ein sogenanntes Atlas-Rohr.

Das im Jahr 1923 genormte Rohr mit Kreisquerschnitt wurde noch nach den im Jahr 1910 erstmals erschienenen Tragfähigkeitsreihen vom Deutschen Betonverein aus der "Tabelle über die Mindesttraglast von Zementrohren für kreis- und eiförmige Rohre mit Fuß" berechnet. Später fand eine Bemessung nach dem in den 60-iger Jahren entwickelten Verfahren statt, bei dem die Schnittgrößen nach dem Kraftgrößenverfahren mit Hilfe des elastischen Schwerpunktes" berechnet wurden. Dabei fand man heraus, daß im Fall von Fußrohren der Einfluß der durch die Fußausbildung veränderten Trägheitsmomente von erheblicher Auswirkung auf die Momentenverteilung ist, d.h. vor allem die an der Sohle auftretenden Spannungen sind viel größer als es die Berechnung unter Annahme allseits gleicher Wanddicken ergibt Die Sohle wurde deswegen in der wandverstärkten Ausführung dicker ausgebildet als der Scheitel. Die Kämpfer konnten mit dünneren Wanddicken als der Scheitel hergestellt werden, weil der entlastend wirkende, in den meisten Fällen vorhandene seitliche Erddruck die Kämpferspannungen abmindert.

Infolge der statischen Unbestimmtheit eines Rohrquerschnittes wirkt sich eine Veränderung der Wanddicke und die damit einhergehende Steifigkeitsänderung an einer Querschnittsstelle allerdings an allen Stellen des Rohrumfanges auf die Schnittgrößen aus. Vergrößert man z.B. die Wanddicke in der Sohle, um die dortigen Biegezugspannungen abzubauen, so erhöht sich dadurch das progressiv ansteigende Trägheitsmoment und durch dessen Biegemoment anziehende Wirkung wiederum das Moment. Die Überprüfung der zulässigen Spannung muß durch Variation der Wanddicken erreicht werden.

Die Verfahren für eine statische Berechnung waren jedoch umständlich und zeitaufwendig. Insbesondere bei von der Kreisform abweichenden Querschnitten wuchs der Rechenaufwand enorm an. Eine Optimierung der Querschnittsform und die damit erforderliche Vielzahl verschiedener Berechnungsgänge mit unterschiedlichen Eingangsgrößen war mit der üblichen Berechnungsmethode nach dem elastischen Schwerpunkt nicht durchführbar, so daß die heute verfügbaren Rohrformen sicher noch nicht optimal sind.

Für das erfindungsgemäße Rohr soll durch strukturanalytische Berechnungen das Tragsystem eines Betonrohres hinsichtlich Gestaltung und Materialausnutzung optimiert werden.

Für das erfindungsgemäße Rohr wird als Optimierungskriterium das Minimum des Verhältnisses Rohrgewicht: Tragfähigkeit gewählt. Gemäß den gültigen Vorschriften ist die Betonzugspannung mit einer Sicherheit von $\gamma=2,2$ einzuhalten. Hierbei wurden Randbedingungen wie zulässige Bodenspannungen mitberücksichtigt. Die gefundenen Querschnitte wurden darüber hinaus stets auch unter den Aspekten Fertigung und Vereinfachung der Verlegung betrachtet. Die Kämpferwanddicke sollte maximal die der heute genormten, wandverstärkten Rohre betragen.

Zur numerischen und technischen Optimierung ist allgemein folgendes zu bemerken.

Die technische Optimierung eines Tragsystems dient der Zielsetzung, Konstruktionen in ihrer Gestaltung und Materialausnutzung optimal zu entwickeln.

Die Entwicklung eines Tragsystems ist immer im Zusammenhang mit der Berechnung von Deformationen und Spannungen zu sehen. Diese Strukturanalyse ist somit Grundlage der technischen Optimierung. Zur Bestimmung der Deformationen und Spannungen wird das reale Tragwerk idealisiert als statisches System dargestellt.

Der Einsatz der technischen Optimierung ist im allgemeinen nur mit einem Rechner möglich, da moderne Optimierungsverfahren iterativ arbeiten und hundert bis tausend Wiederholungen der Berechnungen keine Seltenheit sind

### Terminologie der technischen Optimierung

Für die Formulierung von Optimierungsproblemen im Ingenieurwesen und in der Mechanik sind einige abstrakte Begriffe zu definieren.

### • Optimierungsvariable

Mit den Optimierungsvariablen wird die Geometrie, ggf. die Materialverteilung sowie die Topologie der Tragstruktur veränderlich gemacht. Bei der Strukturanalyse (klassische Verfahren der Mechanik, Finite Element Methoden, etc.) gehen sie als "feste" Eingabewerte ein. Die Optimierungsvariablen werden formal in einem Spaltenvektor angeordnet.

$$x = \begin{bmatrix} x_1 \\ x_2 \\ \cdot \\ \cdot \\ x_m \end{bmatrix} \text{ oder } x = (x_1, x_2, \ldots x_m)^T$$

mit:

m Dimension des Problems [-]

Als Variable bei der Rohroptimierung wurde Wanddicke an n Querschnittsstellen eingeführt, aus der Querschnittsfläche, Trägheitsmomente höherer Ordnung errechnet werden.

### • Restriktionen

Die Berechnung von Optimierungsvariablen ist an Nebenbedingungen gebunden, die im allgemeinen als Restriktionen bezeichnet werden. Restriktionen können Ungleichungs- oder Gleichungscharakter haben. In der Regel überwiegen bei technischen Optimierungsproblemen die Ungleichheitsrestriktionen.

Der Satz der Ungleichheitsrestriktionen wird in Vektorform wie folgt dargestellt:

$$u(x) \leq 0$$

Das Ungleichheitszeichen ≤ wird hierbei als Standardvergleichsoperator gewählt.

Ebenso erhält man für die Gleichheitsrestriktionen (falls vorhanden):

$$h(x) = 0$$

Als Restriktionen wurden eingeführt:

- Mindestwanddicke aus betontechnischer Sicht, z. B.Größtkom des Zuschlages

- Sicherheitsbeiwerte für die Betonzugspannungen sowie Bodenspannungen

- Wanddickenverhältnisse benachbarter Querschnittsteile (Stetigkeit der Rohraußenkontur)

- Ebene Sohle (Rohr mit Fuß)

- Kreisförmiger Abflußquerschnitt

**• Zielfunktion**

Mit der Zielfunktion (Optimierungskriterium) Q(x) wird die dem Optimierungsalgorithmus zugrunde liegende Bewertungsvorschrift festgelegt. Über die Zielfunktion wird die Qualität der Optimierungsvariablen gemessen. Für sie kommen folgende Darstellungen in Frage:

- Volumen

- Gewicht

- Kosten

- bestimmte physikalische Effekte (z.B. Maximalwerte von statischen Größen etc.)

- Energieformen

Als Zielfunktionen für die Rohroptimierung wurden eingeführt:

- Minimierung des Rohrgewichtes bzw. der Rohrquerschnittsfläche

- Maximierung der Tragfähigkeit

- Minimierung der Rohrbreite und damit der Grabenbreite

**• Lösungsgebiete**

Die Lösung der Zielfunktion Q* = Q(x = x*) ist genau dann die mathematisch optimale Lösung, wenn gilt

- bei Minimierung:

$$Q^* \leq Q(x) \qquad x \neq x^*, x \in E^m$$

- bei Maximierung:

$$Q^* \geq Q(x) \qquad x \neq x^*, x \in E^m$$

mit:

x Optimierungsvariable

$E^m$ definierter Raum, der durch m Gleichungen festgelegt ist

Obwohl die obige Definition eindeutig ist, gibt es mit der numerischen Lösung dann Probleme, wenn mehrere lokale Optima auftreten. Da fast alle numerischen Lösungsverfahren, die nicht nach dem Prinzip der biologischen Evolutionsstrategie aufgebaut sind, immer nur lokal begrenzte Informationen verarbeiten, kann die Definition dazu führen, daß nur ein lokales Optimum als "globales" vorgeschlagen wird.

Im vorliegenden Fall wurde von einem genormten wandverstärkten Betonrohr mit Fuß ausgegangen.

Mit Hilfe der angegebenen Optimierung wird das erfindungsgemäße, im Patentanspruch 1 gekennzeichnete Beton- bzw. Stahlbetonrohr erhalten. Das erfindungsgemäße Verlegungsverfahren ist in Anspruch 13 definiert. Bevorzugte Ausführungsformen des Rohres und Verlegungsverfahren sind in den abhängigen Ansprüchen 2-12 bzw. 14 and 15 definiert. Dieses weist folgende neue Eigenschaften auf:

1. optimierte Tragfähigkeit, Sohlspannung, Eigengewicht und Fließquerschnitt Als Beispiel sind die Querschnitts-Abmaße verschiedener Größen eines Rohres in der nachfolgenden Tabelle zusammengefaßt (alle Maßangaben in mm).

| DN | | Wanddicke | | Fußbreite | Rohrbreite |
|---|---|---|---|---|---|
| | Scheitel | Sohle | Kämpfer | | |
| | | | | | |
| 300 | 70 | 80 (20) | 50 | 110 | 400 |
| 400 | 90 | 100 (20) | 50 | 130 | 500 |
| 500 | 105 | 105(20) | 65 | 165 | 630 |
| 600 | 130 | 130 (30) | 75 | 200 | 750 |
| 700 | 150 | 150 (30) | 90 | 230 | 880 |
| 800 | 180 | 180 (30) | 100 | 260 | 1000 |
| | | | | | |

2. Die äußere Kontur ermöglicht die Verlegung und Verdichtung des Einbettungsmaterials auch bei ungünstigen, d.h. geringen Grabenbreiten mit den zur Verfügung stehenden Geräten. Hierzu besitzt das Rohr senkrechte oder nur leicht konisch nach oben verjüngend verlaufende Seitenwände und vorzugsweise anstatt von Glockenmuffen Falzmuffen, die eine Verdichtung des Einbettungsmaterials in der Leitungszone mit Verdichtungsgeräten ermöglichen. Da das Rohr aufgrund der senkrechten bzw. leicht konischen Seitenwände keinen Schatten" wirft und wegen der im Scheitelbereich gegenüber herkömmlichen Rohren deutlich erhöhten Wanddicke und entsprechend höheren Schlagfestigkeit ist das direkte Einfüllen des Einbettungsmaterials auch bei Einsatz grobkörniger Überschüttungsmaterialien möglich, und es wird bereits ohne zusätzlichen Verdichtungsaufwand eine hohe Lagerungsdichte in der Leitungszone erzielt. Eine Verdichtung der Zwickelbereiche von Hand, deren Qualität im allgemeinen nicht der geforderten entspricht, und dann Schäden im Endzustand zur Folge hat, kann entfallen.

3. Aufgrund der vertikalen Seitenwände kann das Rohr in Verbindung mit dem sogenannten Linearverbau als Spreize wirken. Die Rohrlänge entspricht der Länge der Verbauelemente. Auf den Arbeitsraum beidseitig der Rohre kann verzichtet werden. Vorzugsweise erhalten zur Kompensation von Fertigungstoleranzen der Rohre und des Verbaus die Seitenwände hölzerne oder polymere Druckplatten (Polster).

4. Der beim Ziehen des Verbaus unvermeidliche Spalt zwischen dem anstehenden Boden und der Rohraußenwand (Verbauspur) wird sukzessive beim Ziehen verfüllt. Hierzu besitzen die Verbauträger entsprechende Injektionsöffnungen.

5. Um die Rohre absolut vertikal und lagegerecht in die Baugrube ablassen zu können, sind die Lastanschlagspunkte nicht wie heute üblich in Längsrichtung hintereinander, sondern quer nebeneinander angeordnet.

6. Die Rohrverbindung wird als Falzmuffe ausgebildet. Im Unterschied zur Glockenmuffe trägt die Falzmuffe gegenüber dem Rohrschaft nicht auf (Minimierung der Grabenbreite) und erzeugt keine wesentlichen Steifigkeitsunstetigkeiten gegenüber dem Rohrschaft.

7. Zur Erleichterung der Montage besitzt die Falzmuffe vergleichsweise große Zentrierschrägen bzw. einen großen Anlauf. Sie kann mit einer Kammer, Schulter oder Stufen ausgebildet werden.

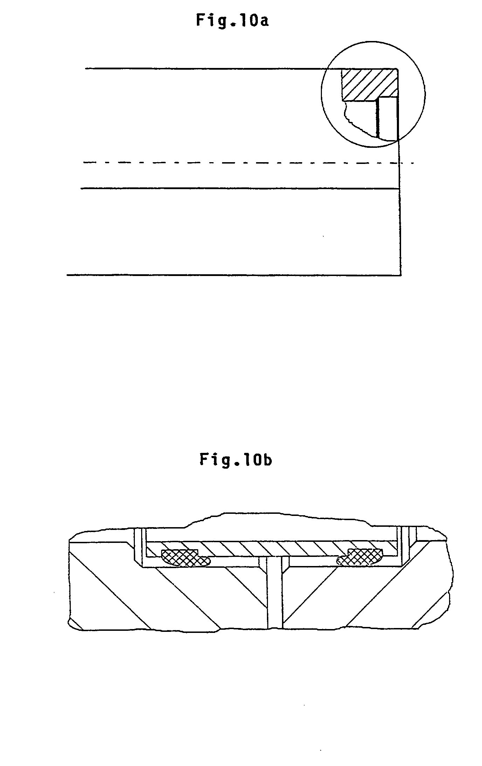

8. Als Dichtungen können kreisrunde bzw. annähernd kreisrunde Rollringe, Gleitringe, Gleitringe mit Schmiermantel, Gleitringe mit großem Funktionsbereich sowie integrierte und aktivierbare Dichtungen verwendet werden. Bei erfindungsgemäßen Rohren ohne Muffe bis DN 600 kann ferner gemäß einer Weiterbildung der Erfindung vorzugsweise eine innenliegende Manschettendichtung aus einer glasfaser-verstärkten Kunststoff- (GFK)-Manschette mit Elastomerdichtungen eingesetzt werden, wie in Fig.10 gezeigt.

9. Zur Aufnahme von Kabeln oder Rohren für Fluide können in den nur geringfügig durch Zugspannungen beanspruchten Querschnittsbereichen im Rohrfuß kreisförmige Hohlräume oder Leerrohre eingesetzt werden, deren Durchmesser maximal der Kämpferwanddicke entspricht (nur sinnvoll ab DN 300).

10. Die Ausbildung der Fuß- bzw. Sohlenfläche des Rohres erfolgt in der Weise, daß eine ungleichmäßige Verdichtung der Grabensohle bzw. ein zu hoher Steifemodul des Bodens im Sohlenbereich nicht zwangsläufig zu einer Rißbildung im Rohrquerschnitt führt. Hierzu ist die Sohle nicht wie bei herkömmlichen Fußrohren eben, sondern mit zwei Füßen versehen (Abmessungen in Abhängigkeit der Nennweite s. Punkt 1). Der Raum zwischen den beiden Füßen wird mit einem sehr leicht verformbaren, nicht verrottenden Material hohlraumfrei ausgefüllt.

11. Bereits bei der Rohrfertigung können an der Rohraußenfläche entweder im Scheitel- oder Sohlenbereich Deformationsschichten fest eingebaut werden, die einen gegenüber dem Beton wesentlich geringeren Elastizitätsmodul besitzen und dadurch nach Verlegung der Rohre Verformungen erhalten, die eine Entlastung des Rohres infolge Lastumlagerung bewirken.

12. Zur weiteren Verbesserung der Tragfähigkeit wird als Rohrwerkstoff ein sogenannter Hochleistungsbeton verwendet. Dieser ist Voraussetzung für die Realisierung der großen Zentrierschrägen bei geringen Wanddicken im Bereich der Falzmuffen, die bei der Rohrmontage und bei eventuellen späteren Bewegungen des verlegten Rohrstranges hohe Belastungen erfahren.

Figurenbeschreibung:

Fig.1a: Rohrquerschnitt einer Standard-Form mit Kreisprofil;
Fig.1b: Rohrquerschnitt einer Standard-Form mit Ei-Profil;
Fig.1c: bekannte Rohrform mit verbessertem Querschnitt;
Fig.2a: Querschnitt eines bekannten sogenannten Atlas-Rohrs;
Fig.2b: Längsschnitt des Atlas-Rohrs der Fig.2a;
Fig.3: eine Ansicht des erfindungsgemäßen Rohrquerschnitts am Beispiel der Nennweite DN 600;

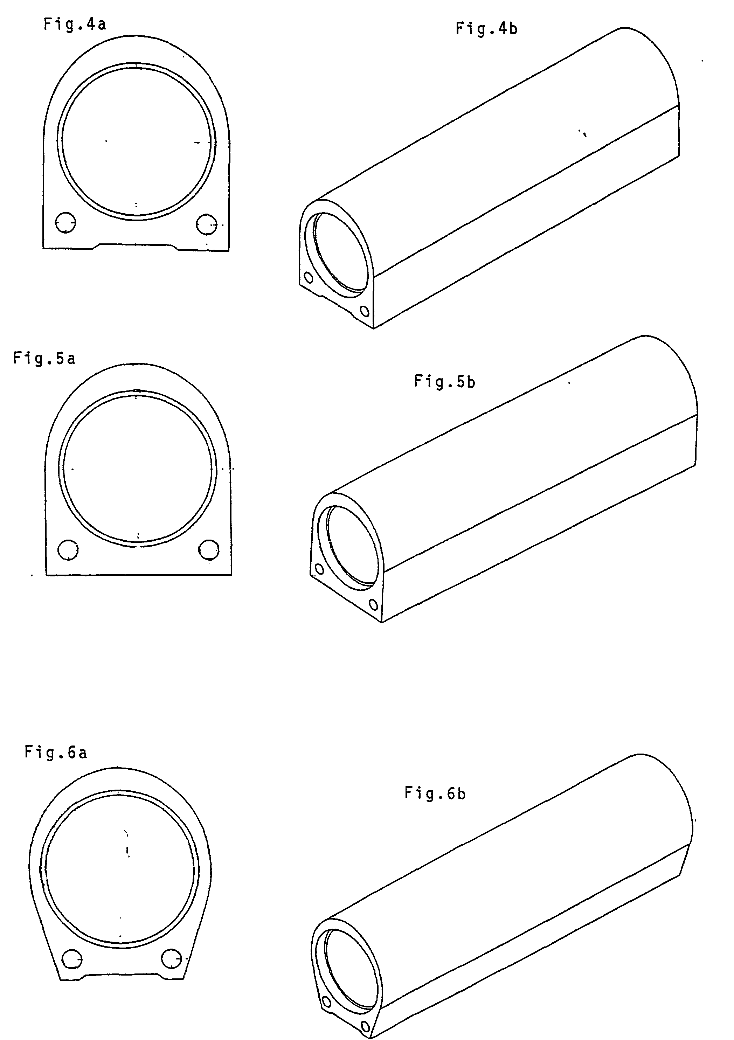

Fig.4a: eine Ausführungsform eines erfindungsgemäßen Rohres mit Leitungskanälen im Querschnitt;
Fig.4b: das Rohr gemäß Fig.4a in perspektivischer Ansicht schräg von vorne;

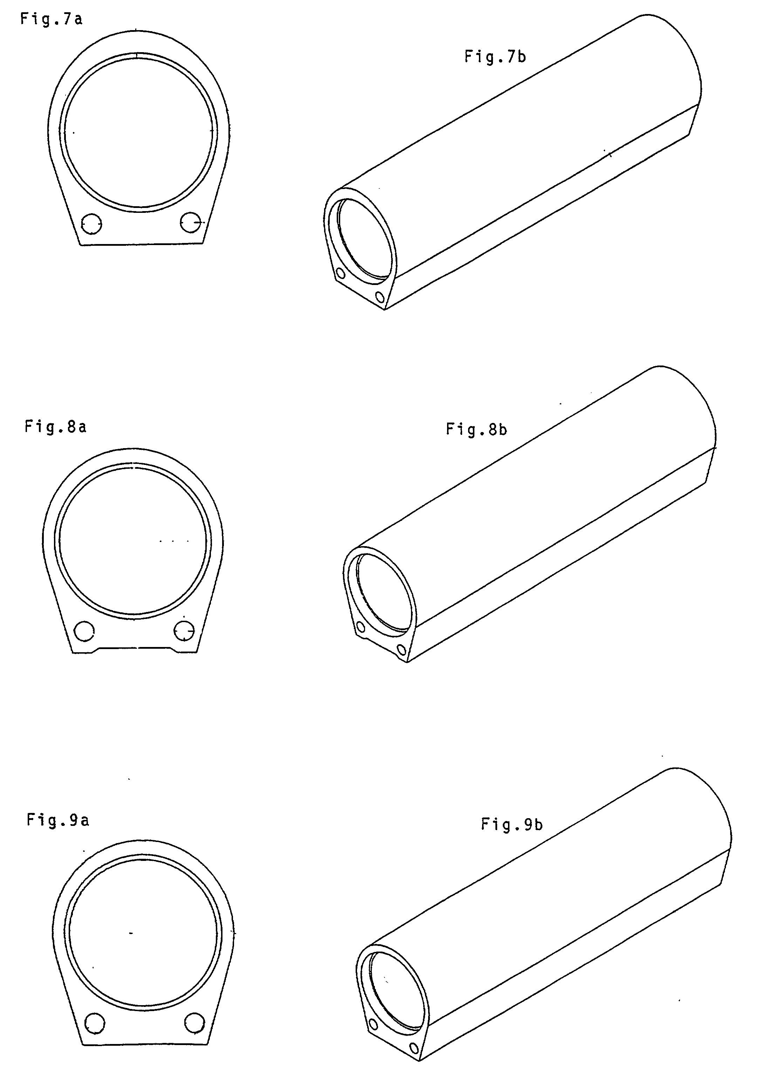

Die Figuren 5a, b bis 9a, b zeigen weitere Ausführungsformen des erfindungsgemäßen Rohrs mit Leitungskanälen im Querschnitt (a) bzw. perspektivischer Ansicht (b);
Fig.10a: eine Einzelheit im vertikalen Schnitt eines erfindungsgemäßen Rohrendes;
Fig.10b: eine vergrößerte Teilansicht eines vertikalen Schnittes durch zwei aneinanderstoßende Rohrenden mit der erfindungsgemäßen innenliegenden Manschettendichtung, bestehend aus einer GFK-Manschette und Elastomerringen.

**Patentansprüche**

1. Beton- bzw. Stahlbetonrohr mit erhöhter Tragfähigkeit mit Fuß und vertikalen oder schrägen Seitenwänden für Kanalisationen, wobei die Querschnittsform durch strukturanalytische Berechnungen auf das Minimum des Verhältnisses von Rohrgewicht zu Tragfähigkeit unter Beachtung der Betonzugspannung mit einer Sicherheit von $\gamma$ = 2,2 und der Kämpfer-Wanddicke nicht größer als die Norm für wandverstärkte Rohre optimiert ist und das Rohr die folgenden wesentlichen Querschnittsabmessungen aufweist.

| DN | | Wanddicke | | Rohrbreite |
|---|---|---|---|---|
| | Scheitel | Sohle | Kämpfer | |
| 300 | 70 | 80(20) | 50 | 400 |
| 400 | 90 | 100(20) | 50 | 500 |
| 500 | 105 | 105(20) | 65 | 630 |
| 600 | 130 | 130(30) | 75 | 750 |
| 700 | 150 | 150 (30) | 90 | 880 |
| 800 | 180 | 180(30) | 100 | 1000 |

**2.** Beton- bzw. Stahlbetonrohr nach Anspruch 1, **dadurch gekennzeichnet, daß** die Sohle mit zwei Füßen versehen ist.

**3.** Beton- bzw. Stahlbetonrohr nach Anspruch 2, **dadurch gekennzeichnet, daß** der Raum zwischen den beiden Füßen mit einem sehr leicht verformbaren, nicht verrottenden Material hohlraumfrei ausgefüllt ist.

**4.** Beton- bzw. Stahlbetonrohr nach Anspruch 2 oder 3, **dadurch gekennzeichnet, daß** die Fußbreite für die zwei vorhandenen Füße gleich und im wesentlichen wie folgt bemessen ist:

| DN | Fußbreite |
|---|---|
| 300 | 110 |
| 400 | 130 |
| 500 | 165 |
| 600 | 200 |
| 700 | 230 |
| 800 | 260 |

**5.** Beton- bzw. Stahlbetonrohr nach einem der Ansprüche 1 bis 4, **dadurch gekennzeichnet, daß** es mit Falzmuffen ausgebildet ist.

**6.** Beton- bzw. Stahlbetonrohr nach einem der Ansprüche 1 bis 5 **dadurch gekennzeichnet, daß** die Seitenwände zur Kompensation von Fertigungstoleranzen der Rohre und des Verbaus mit Druckplatten oder Polstern aus Holz oder Kunststoff versehen sind.

**7.** Beton- bzw. Stahlbetonrohr nach einem der Ansprüche 1 bis 6, **dadurch gekennzeichnet, daß** die Lastanschlagspunkte quer nebeneinander angeordnet sind.

**8.** Beton- bzw. Stahlbetonrohr nach einem der Ansprüche 5 bis 7, **dadurch gekennzeichnet, daß** die Falzmuffe vergleichsweise große Zentrierschrägen bzw. einen großen Anlauf besitzt und gegebenenfalls mit einer Kammer, Schulter oder Stufen ausgebildet ist.

**9.** Beton- bzw. Stahlbetonrohr nach einem der Ansprüche 1 bis 8, **dadurch gekennzeichnet, daß** kreisrunde bzw. annähernd kreisrunde Hohlringe, Gleitringe, Gleitringe mit Schmiermittel, Gleitringe mit großem Funktionsbereich sowie integrierte und aktivierbare Dichtungen und besonders bei Rohren ohne Muffe und bis etwa 600 DN eine innenliegende Manschettendichtung bestehend aus einer Manschette aus glasfaserverstärktem Kunststoff GFK und Elastomerringen als Dichtungen dienen.

**10.** Beton- bzw. Stahlbetonrohr nach einem der Ansprüche 1 bis 9 , **dadurch gekennzeichnet, daß** zur Aufnahme von Kabeln oder Rohren von Fluiden im Rohrfuß kreisförmige Hohlräume oder Leerrohre eingesetzt sind, deren Durchmesser maximal der Kämpfer-Wanddicke entspricht.

**11.** Beton- bzw. Stahlbetonrohr nach einem der Ansprüche 1 bis 10, **dadurch gekennzeichnet, daß** es an der Rohraußenfläche im Scheitel- und/oder Sohlenbereich mit fest eingebauten Deformationsschichten versehen ist, die einen gegenüber dem Beton wesentlich geringeren Elastizitätsmodul aufweisen.

**12.** Beton- bzw. Stahlbetonrohr nach einem der Ansprüche 1 bis 11, **dadurch gekennzeichnet, daß** der Rohrwerkstoff ein sogenannter Hochleistungsbeton ist.

**13.** Verfahren zur Verlegung von Beton- bzw Stahlbetonrohren mit erhöhter Tragfähigkeit mit Fuß und vertikalen oder schrägen Seitenwänden für Kanalisationen nach einem der Ansprüche 1 bis 12 in einem falls erforderlich mit Verbau versehenen Graben, **dadurch gekennzeichnet, daß** die Verlegung in einem Graben vorgenommen wird, dessen Breite, bzw. in dem der Abstand der gegenüberliegenden Verbauelemente die Breite des Rohrs nur um den zum senkrechten Einbringen des Rohrs notwendigen Betrag übersteigt.

**14.** Verfahren nach Anspruch 13, **dadurch gekennzeichnet, daß** beim Herausziehen der Verbauwände der zwischen Rohrseitenwand und Grabenwand entstehende Hohlraum gleichzeitig verfüllt wird.

**15.** Verfahren nach Anspruch 13 oder 14 **dadurch gekennzeichnet, daß** Rohre mit Falzmuffen verlegt werden.

**Claims**

**1.** Concrete or reinforced concrete pipe with increased load-bearing capacity having a foot and vertical or inclined side walls for piping systems, wherein the cross-sectional shape is optimised by structure-analytical calculations to the minimum of the ratio of pipe weight to load-bearing capacity taking account of the tensile stress of the concrete with a certainty of $\gamma = 2.2$ and the springer wall thickness no greater than the norm for wall-reinforced pipes, and the pipe has the following essential transverse cross-sectional dimensions.

| DN | | Wall thickness | | Pipe width |
|---|---|---|---|---|
| | Apex | Base | Springer | |
| 300 | 70 | 80(20) | 50 | 400 |
| 400 | 90 | 100(20) | 50 | 500 |
| 500 | 105 | 105(20) | 65 | 630 |
| 600 | 130 | 130(30) | 75 | 750 |
| 700 | 150 | 150(30) | 90 | 880 |
| 800 | 180 | 180(30) | 100 | 1000 |

**2.** Concrete or reinforced concrete pipe as claimed in claim 1, **characterised in that** the base is provided with two feet.

**3.** Concrete or reinforced concrete pipe as claimed in claim 2, **characterised in that** the space between the two feet is filled - in such a way that no hollow space is left - with a material which can be deformed very easily and does not decay.

**4.** Concrete or reinforced concrete pipe as claimed in claim 2 or 3, **characterised in that** the foot width for the two feet provided is equal and dimensioned substantially as follows:

| DN | Foot width |
|---|---|
| 300 | 110 |
| 400 | 130 |
| 500 | 165 |
| 600 | 200 |
| 700 | 230 |

(continued)

| DN | Foot width |
|---|---|
| 800 | 260 |

**5.** Concrete or reinforced concrete pipe as claimed in any one of claims 1 to 4, **characterised in that** it is formed with rebate bushings.

**6.** Concrete or reinforced concrete pipe as claimed in any one of claims 1 to 5, **characterised in that** the side walls are provided with pressure plates or padding made from wood or synthetic material in order to compensate for manufacturing tolerances of the pipes and sheeting.

**7.** Concrete or reinforced concrete pipe as claimed in any one of claims 1 to 6, **characterised in that** the load-impinging points are disposed transversely next to each other.

**8.** Concrete or reinforced concrete pipe as claimed in any one of claims 5 to 7, **characterised in that** the rebate bushing has comparatively large centring slopes or a large run-up and may if necessary be formed with a chamber, shoulder or steps.

**9.** Concrete or reinforced concrete pipe as claimed in any one of claims 1 to 8, **characterised in that** the seals can be circular or virtually circular hollow rings, slide rings, slide rings with lubricant, slide rings with a large operational area and integrated seals which can be activated, and, particularly in the case of pipes without a bushing and up to about 600 DN, an internal cuff seal consisting of a cuff made from glass fibre-reinforced synthetic material and elastomer rings.

**10.** Concrete or reinforced concrete pipe as claimed in any one of claims 1 to 9, **characterised in that** in order to receive cables or pipes for fluids in the pipe foot circular hollow spaces or empty pipes are inserted, the diameter of which corresponds at most to the springer wall thickness.

**11.** Concrete or reinforced concrete pipe as claimed in any one of claims 1 to 10, **characterised in that** on the outer surface of the pipe in the apex and/or base region it is provided with fixedly installed deformation layers which have a substantially lower modulus of elasticity than the concrete.

**12.** Concrete or reinforced concrete pipe as claimed in any one of claims 1 to 11, **characterised in that** the pipe material is a so-called high-performance concrete.

**13.** Method for laying concrete or reinforced concrete pipes with increased load-bearing capacity having a foot and vertical or inclined side walls for piping systems as claimed in any one of claims 1 to 12 in a trench which if necessary is provided with sheeting, **characterised in that** the pipes are laid in a trench in which the width thereof or in which the spacing between the opposite sheeting elements exceeds the width of the pipe only by the amount necessary for the pipe to be inserted vertically.

**14.** Method as claimed in claim 13, **characterised in that** as the sheeting walls are being withdrawn the hollow space produced between the side wall of the pipe and the trench wall is simultaneously filled.

**15.** Method as claimed in claim 13 or 14, **characterised in that** pipes with rebate bushings are laid.

**Revendications**

**1.** Tube en béton ou en béton armé avec une force portante accrue avec un pied et des parois verticales latérales pour des égouts, dans lequel la forme de la section transversale est optimisée par des calculs d'analyse de structure au niveau minimum du rapport du poids du tube à la force portante en tenant compte de la contrainte de traction du béton avec un coefficient de sécurité de $\gamma = 2,2$ et de l'épaisseur de paroi de la voûte qui n'est pas supérieure à la norme relative aux tubes à parois renforcées, et le tube présente les dimensions essentielles de section transversale suivantes:

| DN | Epaisseur de paroi | | | Largeur du tube |
|---|---|---|---|---|
| | Sommet | Base | Voûte | |
| 300 | 70 | 80( 20) | 50 | 400 |
| 400 | 90 | 100 (20) | 50 | 500 |
| 500 | 105 | 105 (20) | 65 | 630 |
| 600 | 130 | 130 (30) | 75 | 750 |
| 700 | 150 | 150 (30) | 90 | 880 |
| 800 | 180 | 180 (30) | 100 | 1000 |

**2.** Tube en béton ou en béton armé selon la revendication 1, **caractérisé en ce que** la base est pourvue de deux pieds.

**3.** Tube en béton ou en béton armé selon la revendication 2, **caractérisé en ce que** l'espace entre les deux pieds est rempli sans espaces libres avec un matériau très facilement déformable ne pourrissant pas.

**4.** Tube en béton ou en béton armé selon la revendication 2 ou 3, **caractérisé en ce que** la largeur des pieds pour les deux pieds présents est égale et est dimensionnée sensiblement de la façon suivante:

| DN | Largeur de pied |
|---|---|
| 300 | 110 |
| 400 | 130 |
| 500 | 165 |
| 600 | 200 |
| 700 | 230 |
| 800 | 260 |

**5.** Tube en béton ou en béton armé selon l'une quelconque des revendications 1 à 4, **caractérisé en ce qu'**il est formé avec des manchons d'emboîtement.

**6.** Tube en béton ou en béton armé selon l'une quelconque des revendication 1 à 5, **caractérisé en ce que** les parois latérales sont pourvues de plaques de pression ou de coussins de bois ou de plastique pour la compensation des tolérances de fabrication des tubes et de l'étançonnement.

**7.** Tube en béton ou en béton armé selon l'une quelconque des revendications 1 à 6, **caractérisé en ce que** les points d'application des charges sont disposés transversalement les uns par rapport aux autres.

**8.** Tube en béton ou en béton armé selon l'une quelconque des revendications 5 à 7, **caractérisé en ce que** le manchon d'emboîtement possède des chanfreins de centrage relativement grands ou une grande amorce et est éventuellement formé avec une chambre, un épaulement ou des gradins.

**9.** Tube en béton ou en béton armé selon l'une quelconque des revendications 1 à 8, **caractérisé en ce que** des anneaux creux, des anneaux glissants, des anneaux glissants avec un lubrifiant, des anneaux glissants avec une grande zone fonctionnelle, circulaires ou approximativement circulaires, ainsi que des garnitures d'étanchéité intégrées et activables et, en particulier avec des tubes sans manchon et jusqu'à un DN d'environ 600, une manchette d'étanchéité interne se composant d'une manchette en plastique renforcée par des fibres de verre GFK et des anneaux en élastomère font office de garnitures d'étanchéité.

**10.** Tube en béton ou en béton armé selon l'une quelconque des revendications 1 à 9, **caractérisé en ce que** l'on utilise, pour loger des câbles ou des tubes pour des fluides, des espaces creux ou des tuyaux vides circulaires dans les pieds du tube, dont le diamètre correspond au maximum à l'épaisseur de paroi de la voûte.

11. Tube en béton ou en béton armé selon l'une quelconque des revendications 1 à 10, **caractérisé en ce qu'**il est pourvu, sur la surface extérieure du tube dans la région du sommet et/ou de la base, de couches de déformation solidement incorporées, qui présentent un module d'élasticité nettement plus faible que celui du béton.

12. Tube en béton ou en béton armé selon l'une quelconque des revendications 1 à 11, **caractérisé en ce que** le matériau du tube est un béton dit à haute résistance.

13. Procédé pour la pose de tubes en béton ou en béton armé à force portante accrue avec un pied et des parois latérales verticales ou obliques pour des égouts selon l'une quelconque des revendications 1 à 12, dans une tranchée pourvue d'un étançonnement dans le cas où cela est nécessaire, **caractérisé en ce que** la pose est effectuée dans une tranchée dont la largeur, ou dans laquelle la distance des éléments d'étançonnement opposés, ne dépasse la largeur du tube que de la quantité nécessaire pour l'introduction verticale du tube.

14. Procédé selon la revendication 13, **caractérisé en ce que** l'espace creux ménagé entre la paroi latérale du tube et la paroi de la tranchée est comblé simultanément lors de l'extraction des parois d'étançonnement.

15. Procédé selon la revendication 13 ou 14, **caractérisé en ce que** l'on pose des tubes avec des manchons d'emboîtement.

Fig.1

a          b          c

Fig.2

a          b

Fig.3

Fig.4a

Fig.4b

Fig.5a

Fig.5b

Fig.6a

Fig.6b

Fig.7a

Fig.7b

Fig.8a

Fig.8b

Fig.9a

Fig.9b

Fig.10a

Fig.10b